# EUROPÄISCHE PATENTSCHRIFT

(11) **EP 1 696 597 B1**
(45) Veröffentlichungstag und Bekanntmachung des Hinweises auf die Patenterteilung: **13.08.2008**
(21) Anmeldenummer: 06002548.3
(22) Anmeldetag: 08.02.2006
(51) Int. Cl.: H04J 3/06, H04B 7/26

(54) **Synchronisation von Media Gateways in einer IP-Telekommunikationsanlage**
Synchronisation of media gateways in an IP- telecommunication system
Synchronisation de passarelle de media pour IP systèmes de telecommunication

(30) Priorität: 26.02.2005 DE 102005008906
(43) Veröffentlichungstag der Anmeldung: 30.08.2006
(73) Patentinhaber: Avaya-Tenovis GmbH & Co. KG, 60326 Frankfurt (DE)
(72) Erfinder: Müller, Rainer, 84435 Lengdorf (DE); Krantzik, Andreas, Dr., 64404 Bickenbach (DE)
(74) Vertreter: Walkenhorst, Andreas

(56) Entgegenhaltungen:
- EP-A- 1 122 959
- EP-A- 1 209 844
- US-A1- 2006 025 181
- US-B1- 6 542 754
- MIAH A ET AL: "An overview of 3G mobile network infrastructure" 16. Juli 2002 (2002-07-16), RESEARCH AND DEVELOPMENT, 2002. SCORED 2002. STUDENT CONFERENCE ON JUL 16-17, 2002, PISCATAWAY, NJ, USA,IEEE, PAGE(S) 228-232 , XP010603514 ISBN: 0-7803-7565-3 * Absatz [0002] - Absatz [2.1.2] *

## Beschreibung

Die vorliegende Erfindung betrifft eine Telekommunikationsanlage basierend auf IP-Technologie mit einem primären Media Gateway, mindestens einem auf das primäre Media Gateway zu synchronisierenden sekundären Media Gateway und mehreren Funkbasisstationen sowie ein Synchronisationsverfahren gemäß den Merkmalen der Oberbegriffe der unabhängigen Patentansprüche.

Es ist bekannt, leitungsvermittelnde Telekommunikationsanlagen durch paketvermittelnde Telekommunikationsanlagen zu ersetzen, die beispielsweise auf IP-Basis (IP: Internet Protocol) arbeiten. Derartige Telekommunikationsanlagen nutzen die Infrastruktur beispielsweise eines bestehenden Computemetzwerkes, wodurch eine parallele, zweite Infrastruktur für Telefonie überflüssig wird. An eine derartige Telekommunikationsanlage können IP-Telefone unmittelbar angeschlossen werden, während für die Verwendung herkömmlicher Telefone der Einsatz eines sogenannten Media Gateways notwendig ist, das leitungsvermittelte Daten in paketvermittelte Daten übersetzt und umgekehrt. Dabei erzeugt jedes Media Gateway einen internen Takt, der dann benötigt wird, wenn beispielsweise über einen ISDN-Anschluß Endgeräte mit dem Media Gateway verbunden werden sollen.

An die Media Gateways können auch Funkbasisstationen angeschlossen werden, um drahtlose Endgeräte zu betreiben. Soll ein Roaming bzw. Handover zwischen Funkbasisstationen möglich sein, so müssen die Funkbasisstationen taktsynchron betrieben werden. Wird der sogenannte Jitter zu groß, schwankt also der Abstand, in dem mehrere Funkbasisstationen die Aussendung des gleichen Datenrahmens beginnen, über einen bestimmten Wert hinaus, so kann das auf eine Funkbasisstation synchronisierte Endgerät die andere Funkbasisstation nicht erkennen und ein Roaming bzw. Handover ist nicht möglich. Daher müssen die Media Gateways, an die die Funkbasisstationen angeschlossen sind, synchronisiert werden, was über ein paketvermittelndes Netzwerk jedoch nicht mit der erforderlichen Genauigkeit möglich ist.

Verschiedene Verfahren zur Synchronisation von Netzwerken und Einbindung von Funknetzwerken sind aus den Druckschriften US 6,542,754 B1, EP 1 122 959 A1 und EP 1 209 844 A3 bekannt.

Es ist daher Aufgabe der vorliegenden Erfindung, eine Telekommunikationsanlage basierend auf IP-Technologie mit synchronisierten Media Gateways und ein Verfahren zur Synchronisation von Media Gateways in Telekommunikationsanlagen basierend auf IP-Technologie bereitzustellen.

Gelöst wird diese Aufgabe durch eine Telekommunikationsanlage mit den Merkmalen des Anspruchs 1 und ein Synchronisationsverfahren mit den Merkmalen des Anspruchs 6.

Eine erfindungsgemäße Telekommunikationsanlage weist zunächst ein IP-Netzwerk auf, in dem die grundlegende Datenübertragung stattfindet. An das IP-Netzwerk sind mehrere Media Gateways angeschlossen, die als Adapter dienen, um leitungsvermittelnde Endgeräte wie Telefone, Faxgeräte, Funkbasisstationen oder sonstige Einrichtungen mit dem IP-Netzwerk zu verbinden. Eines der Media Gateways wird als primäres Media Gateway bezeichnet, da sein Takt als Referenztakt für andere Media Gateways herangezogen wird. Als sekundär werden solche Media Gateways bezeichnet, die auf das primäre Media Gateways synchronisiert werden sollen. Dies sind mindestens die Media Gateways, an die Funkbasisstationen angeschlossen sind, für die ein Roaming bzw. Handover möglich sein soll. Weiterhin kann die Telekommunikationsanlage Media Gateways aufweisen, für die eine Synchronisation nicht notwendig ist und die unabhängig ihren eigenen Takt erzeugen können, beispielsweise wenn nur leitungsgebundene Endgeräte oder autonome Funkbasisstationen daran angeschlossen werden sollen.

Die Synchronisierung erfolgt dadurch, dass ein primäres Media Gateway einen Systemtakt erzeugt und diesen zusammen mit Laufzeitinformationen an mindestens eine Funkbasisstation überträgt, die ein Signal abstrahlt, welches von mindestens einer weiteren Funkbasisstation empfangen wird. Die Laufzeitinformationen enthalten sowohl die relevanten Kabellaufzeiten zwischen den Komponenten der Telekommunikationsanlage als auch die internen Verarbeitungszeiten der einzelnen relevanten Komponenten. Die mindestens eine weitere Funkbasisstation regeneriert aus dem empfangenen Signal den Systemtakt und überträgt diesen zusammen mit der Laufzeitinformation an ein mit der Funkbasisstation verbundenes sekundäres Media Gateway. Dazu weist an jedem sekundären Media Gateway mindestens eine daran angeschlossene Funkbasisstation eine Einrichtung auf, mit der die Funkbasisstation auf die Aussendung einer anderen Funkbasisstation synchronisierbar ist, um den Systemtakt zu regenerieren und an das angeschlossene sekundäre Media Gateway zu übertragen. Jedes sekundäre Media Gateway weist mindestens einen Anschluss für eine Funkbasisstation auf, über den der regenerierte Takt empfangbar und zur Steuerung des internen Taktes des sekundären Media Gateways verwendbar ist. So ergibt sich eine Synchronisationsstrecke zwischen dem primären Media Gateway und mindestens einem sekundären Media Gateway.

Je nach ihrer Aufgabe in der Synchronisationsstrecke sind die Funkbasisstationen von unterschiedlichem Typ. Eine Funkbasisstation, die den Systemtakt sowie Laufzeitinformationen aussendet, wird im Folgenden als Funkbasisstation des Typs 1 bezeichnet. Funkbasisstationen, die an ein sekundäres Media Gateway angeschlossen sind, den Takt und die Laufzeitinformation regenerieren und an das sekundäre Media Gateway übertragen, sind vom Typ 2. Als vom Typ 0 werden die Funkbasisstationen bezeichnet, die nicht zur Synchronisierung sekundärer Media Gateways verwendet werden. Derartige Funkbasisstationen sind bekannt und werden bereits zahlreich eingesetzt.

Der Takt, den ein sekundäres Media Gateway über die Schnittstelle zu einer Funkbasisstation vom Typ 2 empfängt, wird zur Steuerung des internen Taktgenerators verwendet. Damit und durch die zusätzlich erhaltenen Laufzeitinformationen kann die Synchronität zwischen den Funkbasisstationen der Media Gateways hergestellt werden. Dies geschieht unter anderem mittels der vorhandenen Fähigkeit der Funkbasisstationen, Laufzeitunterschiede auszugleichen.

In einer weiteren Ausgestaltungsform weist die Telekommunikationsanlage mindestens eine Funkbasisstation mit Relay-Funktion auf, die an kein Media Gateway leitungsgebunden angeschlossen ist und die als zwischengeschaltete Funkbasisstation das empfangene Funksignal wiederholt. Dies ist dann notwendig, wenn keine direkte Funkverbindung zwischen einer Funkbasisstation vom Typ 1 und einer Funkbasisstation vom Typ 2 besteht. Eine derartige Funkbasisstation wird als vom Typ 3 bezeichnet. Zur Überbrückung größerer Distanzen ist es möglich, mehrere solcher Funkbasisstationen als Kette in die Gesamt-Synchronisationsstrecke einzubinden.

Die Taktrückgewinnung geschieht also durch das Aufsynchronisieren der Media Gateways auf die Luftschnittstelle. Außerdem geschieht eine Laufzeitkompensation dadurch, dass über die Funkbasisstationen zusätzlich Laufzeitinformationen übertragbar sind. Dabei ist vorgesehen, dass jede Zwischenstation in der Synchronisationsstrecke die Laufzeitinformation um die eigene Verarbeitungszeit sowie eventuelle Kabellaufzeiten erhöht. Die Funkbasisstationen addieren dabei ihre eigene Verarbeitungszeit, die Media Gateways ihre Verarbeitungszeit sowie die jeweiligen Kabellaufzeiten zu den Funkbasisstationen.

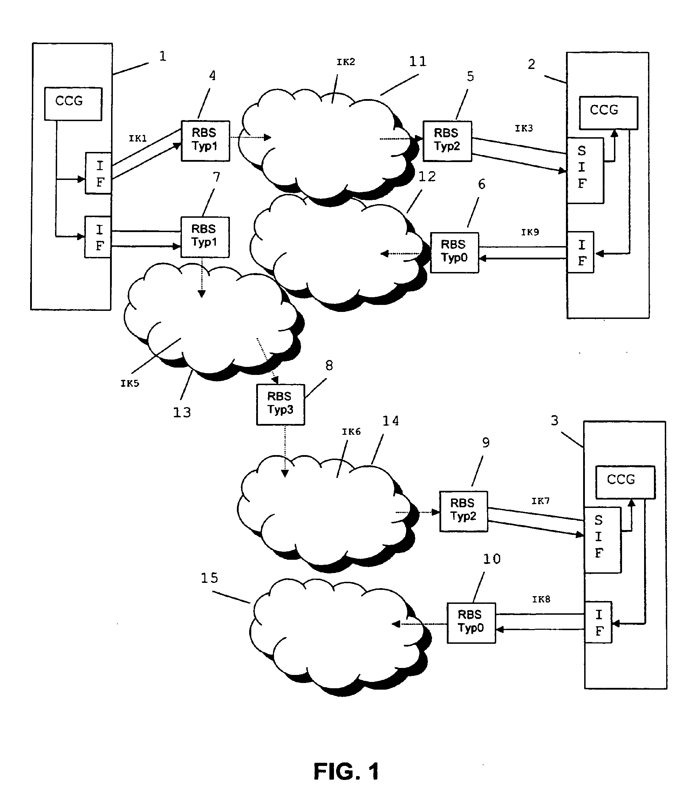

Die vorliegende Erfindung wird anhand eines Ausführungsbeispiels näher erläutert. Dabei zeigt
- Figur 1: eine Telekommunikationsanlage basierend auf IP-Technologie mit zu synchronisierenden Media Gateways.

Figur 1 zeigt eine Telekommunikationsanlage basierend auf IP-Technologie mit einem primären Media Gateway 1, zwei auf das primäre Media Gateway 1 zu synchronisierenden sekundären Media Gateways 2, 3 und mehreren Funkbasisstationen 4-10. Das der Telekommunikationsanlage zugrunde liegende IP-Netzwerk ist in Figur 1 nicht dargestellt.

Der Taktgenerator (CCG: Central Clock Generator) des primären Media Gateways 1 erzeugt einen Takt, der über Schnittstellen (IF: Interface) an die Funkbasisstationen (RBS: Radio Base Station) 4 und 7 übertragen wird. Dies erfolgt über die ISDN-Verbindungen, über die die Funkbasisstationen an die Media Gateways angeschlossen sind. Zusätzlich wird im Informationskanal IK 1 die Summe der internen Verarbeitungszeit des Media Gateways 1 und der Kabellaufzeit zur Funkbasisstation 4 übertragen, im vorliegenden Beispiel über die D-Kanäle der ISDN-Verbindungen. In der Funkbasisstation 4 wird deren interne Verarbeitungszeit zur empfangenen Laufzeitinformation hinzuaddiert und diese Information über die Luftschnittstelle 11 ausgesendet. Auf der Luftschnittstelle 11 wird die Laufzeitinformation im Informationskanal IK 2 übertragen, bei dem es sich um einen dedizierten Nutzkanal handelt.

Die Funkbasisstation 5 vom Typ 2 synchronisiert sich wie ein mobiles Endgerät auf die Luftschnittstelle 11 und empfängt die Laufzeitinformationen aus IK 2. Sie addiert ihre interne Verarbeitungszeit und sendet die Information über den Informationskanal IK 3, bei dem es sich um den D-Kanal der ISDN-Verbindung zum Media Gateway 2 handelt. Das sekundäre Media Gateway 2 weist einen Anschluß für die Funkbasisstation 5 auf, über den der regenerierte Takt empfangbar und zur Steuerung des internen Taktes verwendbar ist. Bei diesem Anschluß handelt es sich um eine Synchronisationsschnittstelle (SIF: Synchronisation Interface). Das Media Gateway 2 ist in der Lage, die Kabellaufzeit zur Funkbasisstation 5 zu messen sowie seinen eingebauten Taktgenerator auf das Signal an einer Synchronisationsschnittstelle und damit auf den Takt des Media Gateways 1 zu synchronisieren. Dies geschieht, indem der Taktgenerator des sekundären Media Gateways durch den regenerierten Takt gesteuert wird. Damit ist die Synchronität der an den anderen Schnittstellen des Media Gateways 2 angeschlossenen Endgeräte sichergestellt. Im vorliegenden Beispiel ist das die Funkbasisstation 6 des Typs 0, die ihr Signal in einen Funkbereich 12 abstrahlt. Sie kompensiert die Signallaufzeit anhand der Laufzeitinformationen, die sie über den Informationskanal IK 9 vom sekundären Media Gateway 2 erhalten hat. Dazu hat das Media Gateway 2 die über den IK3 empfangene Laufzeitinformation um die eigene Verarbeitungszeit sowie die gemessenen Laufzeiten zu den Funkbasisstationen 5 und 6 erhöht.

Das Media Gateway 3 soll ebenfalls auf den Takt des Media Gateways 1 synchronisiert werden. Da jedoch keine direkte Funkverbindung zwischen einer am Media Gateway 1 angeschlossenen Funkbasisstation 7 und einer am Media Gateway 3 angeschlossenen Funkbasisstation 9 besteht, ist der Einsatz einer Relay Station notwendig. Diese wird im vorliegenden Beispiel durch die Funkbasisstation 8 des Typs 3 gebildet.

Die Funkbasisstation 7 des Typs 1 erhält vom Media Gateway 1 den Systemtakt sowie über IK 4 die Laufzeitinformation, zu der es die eigene interne Verarbeitungszeit addiert. Diese Summe wird über einen Nutzkanal IK 5 der Luftschnittstelle 13 übertragen und von der Funkbasisstation 8 empfangen. Diese Funkbasisstation kann sich ebenso wie die Basisstationen vom Typ 2 auf die Luftschnittstelle synchronisieren. Sie speist das empfangene Taktsignal allerdings nicht in eine Leitung ein, sondern nutzt es, um taktsynchron über die Luftschnittstelle 14 zu senden. Dabei wird die Laufzeitinformation um die interne Verarbeitungszeit der Funkbasisstation 8 erhöht und über IK 6 versendet. Funkbasisstation 9 synchronisiert sich auf die Luftschnittstelle 14, interpretiert die Laufzeitinformation, addiert ihre eigene interne Verarbeitungszeit und sendet diese Summe analog zur Funkbasisstation 5 - wie oben beschrieben - über IK 7 an das Media Gateway 3 weiter. Media Gateway 3 synchronisiert seinen internen Taktgenerator auf das über die Synchronisationsschnittstelle empfangene Signal der Basisstation 9 und generiert so einen synchronen Takt für seine übrigen Schnittstellen. An eine dieser Schnittstellen ist die Funkbasisstation 10 des Typs 0 angeschlossen, die ihr Signal in das Gebiet 15 abstrahlt. Bevorzugt handelt es sich bei den Funkbasisstationen um DECT-Basisstationen. Die Laufzeitkompensation erfolgt analog zum Vorgehen bei Media Gateway 2 und Funkbasisstation 6.

Durch die Fähigkeit der Basisstationen der Typen 2 und 3, den Systemtakt aus dem Funksignal auf der Luftschnittstelle zu regenerieren, kann der Takt aller Media Gateways synchronisiert werden. Desweiteren erhält jede Funkbasisstation die Laufzeitinformation, die aussagt, welche Laufzeit der Takt vom Media Gateway 1 aus über die beteiligten Zwischenstationen jeweils benötigt hat. Aufgrund dieser Information können die Funkbasisstationen die Laufzeitunterschiede ausgleichen und so die Synchronität auf der Luftschnittstelle sicherstellen, die für Roaming bzw. Handover benötigt wird. Für DECT werden so der 8 kHz Referenztakt sowie der 160 ms Überrahmentakt übertragen. Über die Informationskanäle wird zusätzlich die Überrahmennummer übertragen, damit sichergestellt ist, dass die Funkbasisstationen auch überrahmensynchron arbeiten.

Prinzipiell kann jede der Funkbasisstationen das gewünschte Nutzsignal (z.B. Sprache) ausstrahlen. Eine Funkbasisstation des Typs 1, 2 oder 3 kann jedoch auch nur Laufzeitinformation und Überrahmennummer aussenden bzw. empfangen und somit ausschließlich Synchronisationszwecken dienen.

Das vorangegangene Ausführungsbeispiel ist rein exemplarisch und insofern nicht beschränkend. Insbesondere können die Anzahl der Media Gateways, die Anzahl und Art der Funkbasisstationen sowie die beispielhaft genannten Zeitdauern und Frequenzen varüeren, ohne den Erfindungsgedanken zu verlassen.

## Patentansprüche

1. Telekommunikationsanlage basierend auf IP-Technologie mit einem primären Media Gateway (1), mindestens einem auf das primäre Media Gateway (1) zu synchronisierenden sekundären Media Gateway (2, 3) und mehreren Funkbasisstationen (4 - 10), **dadurch gekennzeichnet, dass** an jedem sekundären Media Gateway (2, 3) mindestens eine daran angeschlossene Funkbasisstation (5, 9) eine Einrichtung aufweist, mit der die Funkbasisstation (5, 9) auf die Aussendung einer anderen Funkbasisstation (4, 8) synchronisierbar ist, um den Systemtakt zu regenerieren und an das angeschlossene sekundäre Media Gateway (2, 3) zu übertragen, sowie jedes sekundäre Media Gateway (2, 3) mindestens einen Anschluss für eine Funkbasisstation (5, 9) aufweist, über den der regenerierte Takt empfangbar und zur Steuerung des internen Taktes des sekundären Media Gateways (2, 3) verwendbar ist.

2. Telekommunikationsanlage nach Anspruch 1, **gekennzeichnet durch** mindestens eine Funkbasisstation (8) mit Relay-Funktion, die an kein Media Gateway leitungsgebunden angeschlossen ist.

3. Telekommunikationsanlage nach Anspruch 1 oder 2, **dadurch gekennzeichnet, dass** über die Funkbasisstationen (4-10) zusätzlich Laufzeitinformationen übertragbar sind.

4. Telekommunikationsanlage nach einem der Ansprüche 1 bis 3, **dadurch gekennzeichnet, dass** es sich bei den Funkbasisstationen (4 - 10) um DECT-Basisstationen handelt.

5. Synchronisationsverfahren für Media Gateways in Telekommunikationsanlagen basierend auf IP-Technologie, **dadurch gekennzeichnet, dass** ein primäres Media Gateway (1) einen Systemtakt erzeugt und diesen zusammen mit Laufzeitinformationen an mindestens eine Funkbasisstation (4, 7) überträgt, die ein Signal abstrahlt, welches von mindestens einer weiteren Funkbasisstation (5, 9) empfangen wird, wobei die mindestens eine weitere Funkbasisstation aus dem empfangenen Signal den Systemtakt regeneriert und zusammen mit der Laufzeitinformation an ein mit der Funkbasisstation verbundenes sekundäres Media Gateway (2, 3) überträgt.

6. Synchronisationsverfahren nach Anspruch 5, **dadurch gekennzeichnet, dass** der Taktgenerator des sekundären Media Gateways (2, 3) durch den regenerierten Takt gesteuert wird.

7. Verfahren nach Anspruch 5 oder 6, **dadurch gekennzeichnet, dass** das Funksignal von mindestens einer zwischengeschalteten Funkbasisstation (8) wiederholt wird.

8. Verfahren nach einem der Ansprüche 5 bis 7, **dadurch gekennzeichnet, dass** jede Zwischenstation (2-10) in der Synchronisationsstrecke die Laufzeitinformation um die eigene Verarbeitungszeit sowie eventuelle Kabellaufzeiten erhöht.

## Claims

1. Private branch exchange, based on IP technology, with a primary media gateway (19), at least one secondary media gateway (2, 3) to be synchronized to the primary media gateway (1), and several radio base stations (4- 10), **characterized in that** on each secondary media gateway (2, 3), at least one radio base station (5, 9) connected to it includes a device with which the radio base station (5, 9) can be synchronized to the emission of another radio base station (4, 8), in order to regenerate the system clock pulse and to transfer it to the connected secondary media gateway (2, 3), as well as **in that** each secondary media gateway (2, 3) includes at least one connector for a radio base station (5, 9), through which the regenerated clock pulse can be received and used for controlling the internal clock pulse of the secondary media gateway (2, 3).

2. Private branch exchange according to claim 1, **characterized by** at least one radio base station (8) with relay function, which is not connected in a wire-bound manner to a media gateway.

3. Private branch exchange according to claim 1 or 2, **characterized in that** runtime information can additionally be transmitted via the radio base stations (4 - 10).

4. Private branch exchange according to any of claims 1 to 3, **characterized in that** the radio base stations (4 - 10) are DECT base stations.

5. Synchronization method for media gateways in private branch exchanges based on IP technology, **characterized in that** a primary media gateway (1) generates a system clock pulse and transmits it together with runtime information to at least one radio base station (4, 7), which emits a signal which is received by at least one further radio base station (5, 9), the at least one further base station regenerating the system clock pulse from the received signal and transmitting it together with the runtime information to a secondary media gateway (2, 3) connected with the radio base station.

6. Synchronization method according to claim 5, **characterized in that** the clock-pulse generator of the secondary media gateway (2, 3) is controlled by the regenerated clock pulse.

7. Synchronization method according to claim 5 or 6, **characterized in that** the radio signal is repeated by at least one inserted radio base station (8).

8. Method according to any of claims 5 to 7, **characterized in that** each intermediate station (2 - 10) in the synchronization path increases the runtime information by its own processing time and any cable runtimes.

## Revendications

1. Installation de télécommunication, basée surla technologie IP, comprenant un media gateway primaire (19), au moins un media gateway secondaire (2, 3) à synchroniser sur le media gateway primaire (1), et plusieurs stations de base de radiocommunication (4 - 10), **caractérisée en ce que** sur chaque media gateway secondaire (2, 3), au moins une station de base de radiocommunication (5, 9) connectée avec lui comprend un dispositif avec lequel la station de base de radiocommunication (5, 9) peut être synchronisée sur l'émission d'une autre station de base de radiocommunication (4, 8), afin de régénérer l'impulsion de système et de la transférer au media gateway secondaire (2, 3) connecté, ainsi qu'en ce que chaque media gateway secondaire (2, 3) comprend au moins un raccord pour une station de base de radiocommunication (5, 9), par lequel l'impulsion régénérée peut être reçue et utilisée pour commander l'impulsion interne du media gateway secondaire (2, 3).

2. Installation de télécommunication selon la revendication 1, **caractérisée par** au moins une station de base de radiocommunication (8) avec fonction de relais, qui n'est pas connectée de manière guidée par fil avec un media gateway.

3. Installation de télécommunication selon la revendication 1 ou 2, **caractérisée en ce que** des informations sur la durée de parcours peuvent additionnellement être transmises au moyen des stations de base de radiocommunication (4 - 10).

4. Installation de télécommunication selon l'une quelconque des revendications 1 à 3, **caractérisée en ce que** les stations de base de radiocommunication (4 - 10) sont des stations de base DECT.

5. Méthode de synchronisation pour des media gateways dans des installations de télécommunication basées sur la technologie IP, **caractérisée en ce qu'**un media gateway primaire (1) génère une impulsion de système et la transmet avec les informations sur la durée de parcours à la, au moins une, station de base de radiocommunication (4, 7), qui émet un signal qui est reçu par au moins une autre station de base de radiocommunication (5, 9), et la, au moins une, autre station de base régénère l'impulsion de système à partir du signal reçu et le transmet avec les informations sur la durée de parcours à un media gateway secondaire (2, 3) connectée avec la station de base de radiocommunication.

6. Méthode de synchronisation selon la revendication 5, **caractérisée en ce que** le générateur d'impulsions du media gateway secondaire (2, 3) est commandé par l'impulsion régénérée.

7. Méthode de synchronisation selon la revendication 5 ou 6, **caractérisée en ce que** le signal de radiocommunication est répété par au moins une station de base de radiocommunication (8) insérée.

8. Méthode selon l'une quelconque des revendications 5 à 7, **caractérisée en ce que** chaque station intermédiaire (2 - 10) dans le trajet de synchronisation path augmente les informations sur la durée de parcours par sa propre temps de traitement et par des durées de parcours éventuelles de câbles.
